# EUROPÄISCHE PATENTANMELDUNG

(11) **EP 1 588 827 A2**
(43) Veröffentlichungstag der Anmeldung: **26.10.2005**
(21) Anmeldenummer: 05007709.8
(22) Anmeldetag: 08.04.2005
(51) Int. Cl.: B29C 51/44, B29C 51/16, B65G 47/00

(54) **Verfahren zum Betreiben einer Thermoformmaschine und Thermoformmaschine**

(30) Priorität: 23.04.2004 DE 102004019682
(71) Anmelder: Gabler Thermoform GmbH & Co. KG, 23568 Lübeck (DE)
(72) Erfinder: Grolla, Peter, 23562 Lübeck (DE)
(74) Vertreter: Grosse, Wolf-Dietrich Rüdiger

(57) **Zusammenfassung**

Die Erfindung betrifft ein Verfahren zum Betreiben einer Thermoformmaschine (1) zum Formen von Artikeln (2) aus Kunststoff, bei dem eine thermoplastische Folie (3) in ein mindestens zweiteiliges Werkzeug (4, 5) eingebracht und tiefgezogen wird. Um die Produktivität der Thermoformmaschine zu erhöhen, sieht die Erfindung verfahrensgemäß vor, dass vor dem Tiefziehen der Folie (3) mindestens ein Aufdruckelement (10) in mindestens einen Teil (5) des Werkzeugs (4, 5), vorzugsweise in die mindestens eine Formteilkavität des Werkzeugteils (4, 5), eingelegt wird, das durch das Tiefziehen mit der einen Seite der Folie (3) bleibend verbunden wird, und dass nach dem Tiefziehen der Folie (3) und der Herstellung der Artikel (2) die geformten Artikel (2) aus dem restlichen Teil (6) der Folie (3) ausgeschnitten, insbesondere ausgestanzt werden, wobei der Schneidvorgang mittels Bandstahlschnitt erfolgt. Des weiteren betrifft die Erfindung eine Thermoformmaschine (1).

## Beschreibung

Die Erfindung betrifft ein Verfahren zum Betreiben einer Thermoformmaschine zum Formen von Artikeln aus Kunststoff, bei dem eine thermoplastische Folie in ein mindestens zweiteiliges Werkzeug eingebracht und tiefgezogen wird. Des weiteren betrifft die Erfindung eine Thermoformmaschine.

Ein Verfahren zum Betreiben einer Thermoformmaschine bzw. eine Thermoformmaschine der gattungsgemäßen Art ist beispielsweise aus der DE 33 46 628 C2, der DE 91 08 344 U1 und der DE 101 57 134 A1 bekannt. Dort werden zwischen den relativ zueinander beweglichen Teilen eines Werkzeugs Kunststoffartikel (beispielsweise Margarineschalen, Trinkbecher, Behälterdeckel) aus thermoplastischen Kunststofffolien und Verbundfolien produziert. Dabei werden in der geschlossenen Stellung des aus Ober- und Unter-Werkzeug bestehenden Werkzeugs die Artikel geformt, dann gestanzt und anschließend bei geöffneter Stellung des Werkzeugs aus diesem heraus und in eine nachgeschaltete Stapel- und Zählvorrichtung gefördert. Das Oberteil des Werkzeugs der Maschine kann dabei an einer starren Querbrücke montiert sein; das Unterteil des Werkzeugs kann indes höhenbeweglich sowie schwenkbar ausgestaltet werden.

In der Regel werden dabei mit einem Bearbeitungszyklus mehrere Artikel gleichzeitig produziert. Gelegentlich bestehen prozessbedingte Schwierigkeiten, wenn die thermogeformten und aus der Restfolie (Restgitter) ausgestanzten Artikel aus dem einen Werkzeugteil entformt werden müssen. Zum Entformen wird bei Kippmaschinen zumeist das untere Werkzeugteil nach unten verfahren und um einen gewünschten Schwenkwinkel seitlich geschwenkt.

Diese Problematik stellt sich auch, wenn die thermogeformten Artikel während ihres Herstellungsprozesses mit einem Aufdruck (Label) versehen werden sollen (In-Mold-Labelling-Technik). Der Aufdruck kann vor dem Tiefziehen der vorgewärmten thermoplastischen Folie in der Formteilkavität platziert werden. Beim Tiefziehen kommt es zu einer bleibenden Verbindung zwischen Aufdruck und Folie, was durch die aufgebrachte Tiefziehkraft im Zusammenwirken mit der erhitzten Folie stattfindet.

Als problematisch hat es sich hierbei herausgestellt, dass relativ viel Prozesszeit dafür nötig ist, die nach der Herstellung und dem Ausstanzen sich im Werkzeug befindlichen einzelnen Artikel aus dem Werkzeug zu entnehmen. Dieser Vorgang ist erst durchzuführen, bevor neue Aufdrucke in das Werkzeug eingelegt werden können, so dass sich der nachfolgende Fertigungszyklus anschließen kann. Das bedeutet also, dass - insbesondere beim In-Mold-Labelling - die Entformung der Artikel aus dem Werkzeug nachteilige Produktionseinbußen bedingt.

Der Erfindung liegt daher die Aufgabe zugrunde, ein Verfahren zum Betreiben einer Thermoformmaschine sowie eine solche Thermoformmaschine zu schaffen, mit dem bzw. mit der diese Nachteile vermieden werden. Die Produktivität des Verfahrens bzw. der Thermoformmaschine soll also insbesondere im Hinblick auf den Entformungsteilprozess erhöht werden.

Die Lösung dieser Aufgabe durch die Erfindung ist verfahrensgemäß dadurch gekennzeichnet, dass vor dem Tiefziehen der Folie mindestens ein Aufdruckelement in mindestens einen Teil des Werkzeugs, vorzugsweise in die mindestens eine Formteilkavität des Werkzeugteils, eingelegt wird, das durch das Tiefziehen mit der einen Seite der Folie bleibend verbunden wird, und dass nach dem Tiefziehen der Folie und der Herstellung der Artikel die geformten Artikel aus dem restlichen Teil der Folie ausgeschnitten, insbesondere ausgestanzt werden, wobei der Schneidvorgang mittels Bandstahlschnitt erfolgt.

Durch die spezifische Kombination der vorgeschlagenen Maßnahmen ergibt sich eine wesentliche Erhöhung der Produktivität des Thermoformprozesses: Durch das nach dem In-Mold-Labelling erfolgende Ausschneiden der Artikel aus dem Restgitter durch Bandstahlschnitt wird es möglich, zunächst eine Entformung des Restgitters samt daran noch angeordneter Artikel zu bewerkstelligen, so dass die Entformung schneller durchgeführt werden kann; nicht jeder einzelne Artikel muss entformt werden. Durch die reduzierte Entformzeit kann schneller damit begonnen werden, den einen Teil des Werkzeugs mit neuen Labeln zu beschicken, so dass sich insgesamt eine geringere Prozesszykluszeit ergibt.

Eine erste Weiterbildung sieht vor, dass der zum Ausschneiden zum Einsatz kommende Bandstahl rechtwinkelig auf die Folie gedrückt wird, wobei der Bandstahl mit einer sich auf der anderen Seite der Folie befindlichen Gegenstandsplatte zusammenwirkt. Dabei ist noch offen, wo der Bandstahlschnitt durchgeführt wird. Es kann dies in der Thermoformmaschine sein oder auch in einer nachgelagerten Arbeitsstation.

Zum an sich bekannten Bandstahlverfahren wird z. B. auf die DE 101 09 111 C1 hingewiesen.

Vorzugsweise wird nach dem Öffnen des Werkzeugs das eine Teil des Werkzeugs um einen Schwenkwinkel in eine geschwenkte Position gefahren, in der die Entformung der fertigen Artikel und des restlichen Teils der Folie erfolgt (sog. Kippmaschine).

Besonders vorteilhaft ist es, wenn nach dem Tiefziehen und nach dem Öffnen des Werkzeugs alle geformten Artikel samt dem restlichen Teil der Folie gemeinsam aus dem Werkzeug entformt und abtransportiert werden, wobei alle geformten Artikel und der restliche Teil der Folie, also das Restgitter, zumindest teilweise miteinander verbunden sind. Mit Vorteil ist dabei weiter vorgesehen, dass nach dem Tiefziehen und vorzugsweise nach dem Öffnen des Werkzeugs die geformten Artikel aus dem restlichen Teil der Folie nur teilweise ausgeschnitten werden, wobei der Schneidvorgang so erfolgt, dass mindestens eine Verbindungsstelle, vorzugsweise 3 bis 8 Verbindungsstellen, zwischen jedem Artikel und dem restlichen Teil der Folie erhalten bleibt.

Bewährt hat es sich bei dieser Lösung, wenn die mindestens eine Verbindungsstelle zwischen jedem Artikel und dem restlichen Teil der Folie eine Erstreckung aufweist, die zwischen dem 0,5-fachen und 2,0-fachen der Dicke der Folie liegt; besonders vorteilhaft ist dabei eine Erstreckung der Verbindungsstelle entsprechend dem 1,0-fachen der Dicke der Folie. Dies begünstigt die Funktion der Verbindungsstellen, die nämlich Mittel darstellen, um die Artikel zusammen mit der Folie (Restgitter) in vorteilhafter Weise transportieren zu können.

Weiterhin kann bei dieser Ausbildung vorgesehen sein, dass nach dem Entformen der Artikel samt dem restlichen Teil der Folie aus dem Werkzeug die Artikel samt restlicher Folie in eine Nachfolgeanlage gefördert werden, in der die mindestens eine Verbindungsstelle durchtrennt und dadurch die Artikel vom restlichen Teil der Folie getrennt werden. In der Nachfolgeanlage kann auch eine Stapelung gefertigter Artikel erfolgen.

Die vorgesehenen Verbindungsstellen sind also das Mittel dafür, die gefertigten Artikel samt restlicher Folie (Restgitter) aus der Thermoformmaschine zu transportieren, und zwar in sehr kurzer Zeit, was - wie noch gesehen werden wird - die Produktivität des Verfahrens vor allem in Verbindung mit der In-Mold-Labelling-Technik erhöht.

Eine alternative Ausgestaltung sieht vor, dass nach dem Tiefziehen und nach dem Öffnen des Werkzeugs alle geformten Artikel samt dem restlichen Teil der Folie gemeinsam aus dem Werkzeug entformt und abtransportiert werden, wobei Artikel und restlicher Teil der Folie (also das Restgitter) vollständig miteinander verbunden sind und wobei das Trennen der Artikel von dem restlichen Teil der Folie in einer Nachfolgeanlage erfolgt.

Eine verfahrensmäßig sehr vorteilhafte Ausgestaltung sieht vor, dass die Folie im wesentlichen horizontal in den Bereich des Werkzeugs der Thermoformmaschine eintritt und - nach dem Formen der Artikel durch das Tiefziehen und dem Öffnen des Werkzeugs - die geformten Artikel samt dem restlichen Teil der Folie den Bereich des Werkzeugs im wesentlichen in horizontale Richtung verlassen.

In allen Fällen hat es sich als vorteilhaft erwiesen, wenn unmittelbar nach dem Öffnen des Werkzeugs und nach dem oder parallel zum Entfernen der geformten Artikel samt dem restlichen Teil der Folie mindestens ein Teil des Werkzeugs, vorzugsweise die mindestens eine Formteilkavität des Werkzeugteils, mit mindestens einem neuen Aufdruckelement versehen wird.

Die vorgeschlagene Thermoformmaschine zum Formen von Artikeln aus Kunststoff hat ein mindestens zweiteiliges Werkzeug, in das eine thermoplastische Folie eingebracht und in dem diese tiefgezogen werden kann. Erfindungsgemäß ist die Maschinen gekennzeichnet durch Mittel zum Einlegen mindestens eines Aufdruckelements in einen Teil des Werkzeugs, vorzugsweise in die mindestens eine Formteilkavität des Werkzeugteils, sowie in der Thermoformmaschine oder in einer der Thermoformmaschine nachgeschalteten Nachfolgeanlage angeordnete Mittel zum Ausschneiden der geformten Artikel aus dem restlichen Teil der Folie, wobei die Mittel zum Ausschneiden Bandstahlschneidemittel sind.

Mit Vorteil sind die Mittel zum Ausschneiden der geformten Artikel aus dem restlichen Teil der Folie zum nur teilweisen Ausschneiden geeignet, so dass mindestens eine Verbindungsstelle, vorzugsweise 3 bis 8 Verbindungsstellen, zwischen jedem Artikel und dem restlichen Teil der Folie erhalten bleibt. Dabei sind mit Vorteil die Mittel zum Ausschneiden so ausgebildet, dass sie die geformten Artikel von dem restlichen Teil der Folie so trennen, dass die mindestens eine Verbindungsstelle eine Erstreckung aufweist, die zwischen dem 0,5-fachen und 2,0-fachen der Dicke der Folie liegt, vorzugsweise dem 1,0-fachen der Dicke der Folie entspricht. Unter Erstreckung ist hier die Ausdehnung in eine Achsrichtung zu verstehen, z. B. im Umfangsrichtung eines kreisförmigen Schnitts gemessen.

Danach stellt die Erfindung also darauf ab, dass der abschließende Ausschneide- bzw. Stanzprozess vor dem Entformen der Artikel (im Falle dessen, dass noch in der Thermoformmaschine ein Schnitt zwischen Artikel und Restgitter durchgeführt wird) so ausgeführt wird, dass die Artikel einerseits und die verbleibende Restfolie (Restgitter) andererseits nicht vollständig voneinander getrennt werden, sondern noch über eine Anzahl Haltepunkte verbunden sind. Damit wird ein sehr viel einfacheres und schnelleres Entformen der Artikel samt Restgitter aus dem Werkzeug möglich, da die Handhabung des relativ großen Restgitters samt über Verbindungsstellen angeordneter Artikel in verfahrenstechnisch einfacher Weise vorgenommen werden kann. Das Restgitter samt Artikel kann beim nach unten Fahren der unteren Werkzeughälfte in einfacher Weise gegriffen und in eine Nachfolgeanlage gefördert werden. Parallel hierzu kann die eine Werkzeughälfte bereits wieder mit neuen Labeln bestückt werden. Die Produktivität des Verfahrens wird dadurch wesentlich erhöht.

In der Zeichnung ist ein Ausführungsbeispiel der Erfindung dargestellt. Es zeigen:
- Fig. 1: schematisch in der Seitenansicht eine Thermoformmaschine mit einer Nachfolgeanlage zur Herstellung von Bechern aus thermoplastischem Kunststoff,
- Fig. 2: die Draufsicht auf einen Teil verarbeiteter Folie mit einer Anzahl gefertigter Artikel,
- Fig. 3: die vergrößerte Ansicht eines Ausschnitts aus Fig. 2,
- Fig. 4: Bandstahlmittel zum Ausschneiden der Artikel aus dem Restgitter und
- Fig. 5: einen vergrößerten Ausschnitt des Werkzeugunterteils gemäß Fig. 1 in Schnittdarstellung beim In-Mould-Labelling.

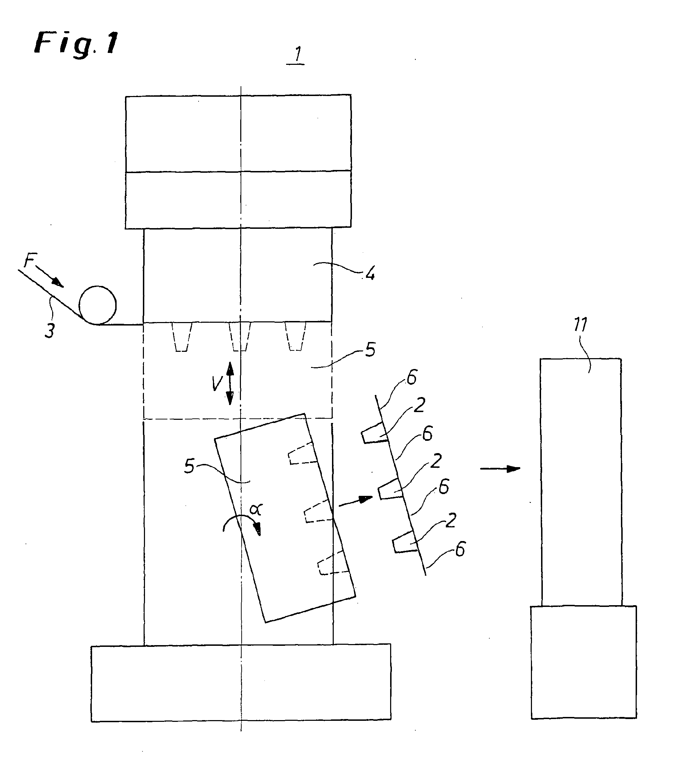

In Fig. 1 ist eine Thermoformmaschine 1 zum Formen von Artikeln skizziert, der von der (linken) Seite her ein Kunststoff-Folienband 3 einlaufseitig in Folienförderrichtung F zugeführt wird, wobei das Folienband 3 horizontal in die Thermoformmaschine 1 gelangt. Zum Transport kommen sogenannte Stachelketten zum Einsatz, d. h. Rollenketten, die Stachel tragen und das Folienband 3 an ihren Rändern links und rechts einpieksen bzw. -stechen. Das Folienband 3 bleibt sowohl während als auch nach dem Formen der Artikel als Ganzes erhalten. Die Thermoformmaschine 1 weist ein Werkzeug 4, 5 auf, das zweiteilig ausgebildet ist und aus einem ortsfest angeordneten oberen Werkzeugteil 4 (obere Werkzeughälfte) sowie einem relativ zu diesem beweglichen Werkzeugteil 5 (untere Werkzeughälfte) besteht.

Das bewegliche Werkzeugteil 5 ist translatorisch in Vertikalrichtung V relativ zum ortsfesten Werkzeugteil 4 beweglich und im übrigen in geöffneter Werkzeugposition verschwenkbar angeordnet, um die Entformung von gefertigten Artikeln 2 zu bewerkstelligen und diese einer nachgeschalteten Nachfolgeanlage 11 zuzuführen. Nicht dargestellt ist eine an sich bekannte Stapel- und Zählvorrichtung für die weitere Handhabung der gefertigten Artikel 2.

In Fig. 1 ist mit ausgezogenen Linien das geöffnete Werkzeug 4, 5 mit dem um den Schwenkwinkel α verschwenkten beweglichen Werkzeugteil 5 skizziert. Mit gestrichelten Linien ist das bewegliche Werkzeugteil 5 in der Position gezeigt, in der die Folie 3 im Werkzeug 4, 5 tiefgezogen wird.

Bei der skizzierten Thermoformmaschine 1 handelt es sich also um eine Kippmaschine (mit schwenkbarem Werkzeugteil), in der die thermoplastische Folie 3 zu den Artikeln 2 verformt (tiefgezogen) und im übrigen, wie noch beschrieben werden wird, ausgestanzt wird.

Die Folie 3 wird bei geschlossenem Werkzeug 4, 5 im Bereich der einzelnen Formteilkavitäten (gemäß der Form der herzustellenden Becher 2) geklemmt. Der Werkzeugraum wird dabei durch die Folie abgedichtet. Dann kann Druckluft von der oberen Werkzeughälfte in die untere Werkzeughälfte geleitet werden. Gegebenenfalls kann durch sog. mechanische Vorstrecker die Ausbildung des Artikels 2 aus der Folie 3 unterstützt werden.

Die Folie 3 wurde vor dem Einbringen ins Werkzeug 4, 5 erwärmt; die Wandungen des Werkzeugs 4, 5 sind gekühlt. Dadurch legt sich die warme Folie an die Kavitätswandungen des Werkzeugs an und kühlt ab, wodurch der Artikel 2 gebildet wird.

Vor dem Öffnen erfolgt ein Schneidevorgang, mit dem der überwiegende Teil der Verbindung zwischen restlicher Folie 6 (Restgitter) und Artikeln 2 durchtrennt wird. Nach dem Öffnen und Schwenken der unteren Werkzeughälfte 5 erfolgt das Entformen sowohl der Artikel 2 als auch des Restgitters 6, was in Fig. 1 schematisch durch einen Pfeil angedeutet ist.

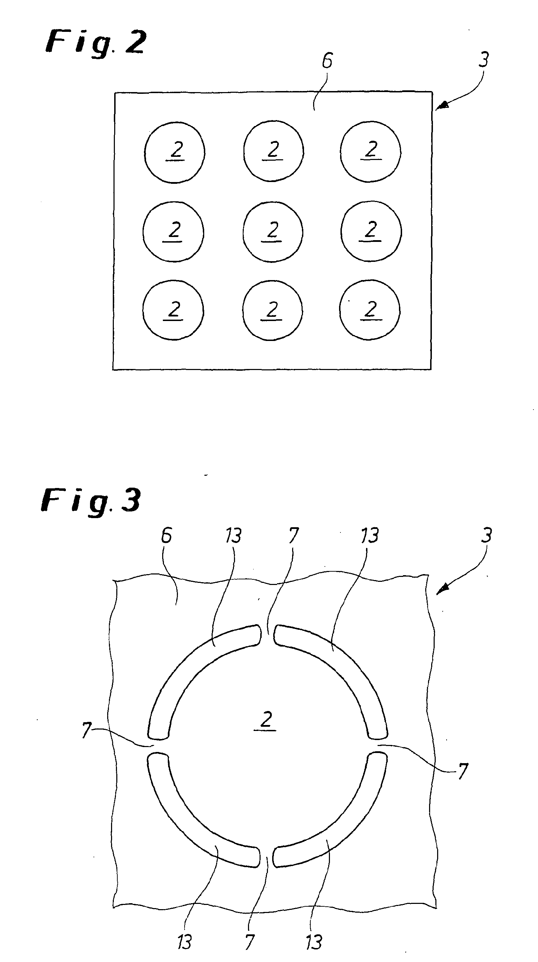

In Fig. 2 ist die Draufsicht auf einen Folienteil 3 zu sehen, wie er aus der Thermoformmaschine 1 kommt, bevor er in die Nachfolgeanlage 11 transportiert wird. Es wurde aus der Folie 3 eine Anzahl Artikel 2 - im Ausführungsbeispiel neun Artikel - geformt. Das Werkzeug 4, 5 ist also als Mehrfachwerkzeug ausgebildet, mit dem pro Verfahrenszyklus neun Artikel 2 gefertigt werden. Fig. 3 zeigt einen vergrößerten Ausschnitt aus der Ansicht gemäß Fig. 2.

Hier ist zu sehen, dass in der Thermoformmaschine 1 ein Ausschneiden des Artikels 2 mit dem Restgitter 6 aus der Folie 3 erfolgte. Der ausgeführte Schnitt ist mit der Bezugsziffer 13 bezeichnet. Allerdings erstreckt sich der Schnitt 13 nicht vollumfänglich um den Rand des Artikels 2, so dass dieser komplett vom Restgitter 6 gelöst wäre. Vielmehr sind insgesamt vier Verbindungsstellen 7 (Haltepunkte) erhalten, die noch einen Verbindungsabschnitt zwischen Artikel 2 und Restgitter 6 bilden. Hierdurch wird es möglich, das Restgitter 6 samt der damit noch verbundenen Artikel 2 gemeinsam aus dem unteren Werkzeugteil 5 abzutransportieren, wie es in Fig. 1 angedeutet ist. Da nicht die einzelnen Artikel 2 für sich entformt werden müssen, ergibt sich eine höhere Effizienz beim Entformen und damit insgesamt eine höhere Produktivität der Thermoformmaschine 1.

Die Erstreckung und Anzahl der Verbindungsstellen 7 sind so gewählt, dass ein zuverlässiger Transport der Artikel 2 bei der Entnahme des Restgitters 6 sichergestellt ist. Es haben sich drei bis acht Verbindungsstellen bewählt. Bei kreisrundem Schnitt 13 ist eine Erstreckung der Summe aller Verbindungsstellen 7 - in Umfangsrichtung betrachtet - von 0,5 % bis 5 % des Gesamtumfangs geeignet.

Bewährt hat es sich dabei, wenn die Erstreckung der Verbindungsstellen 7, d. h. die Länge der Verbindungsstellen in Umfangsrichtung gemessen, etwa der Dicke der Folie 3 entspricht, z. B. also ca. 0,5 mm beträgt.

Dadurch ergibt sich in besonders vorteilhafter Weise die Möglichkeit, eine schnelle und einfache Entformung der Artikel 2 aus dem Werkzeug 4, 5 zu bewerkstelligen: Nachdem die einzelnen geformten Artikel 2 nach dem Tiefziehen mit dem Restgitter 6 zumindest noch teilweise verbunden sind, werden die Artikel 2 beim Entformen von dem Restgitter 6 "mitgenommen". So wird eine schnelle und komplette Entformung des Werkzeugs 4, 5 durch Entnahme des Restgitters 6 mit sich daran befindlichen Artikeln 2 möglich wird. Dies hat insbesondere - wie noch gesehen werden wird - im Falle der In-Mold-Labelling-Technik große Vorteile.

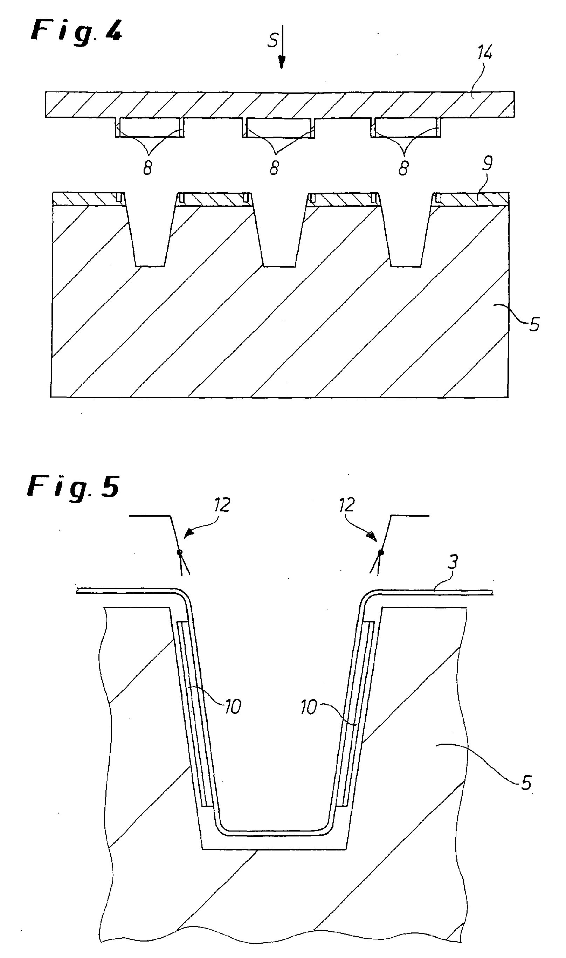

Das Ausschneiden der Artikel 2 aus dem Restgitter 6, d. h. das Einbringen des Schnitts 13 zwischen Restgitter 6 und Artikel 2, erfolgt mit den in Fig. 4 dargestellten Mitteln:

Es handelt sich hier um an sich bekannte Bandstahl-Schneidemittel. Der Bandstahl 8 ist auf einer Trägerplatte 14 angeordnet, die in Stanzrichtung S nach dem Thermoformen der Artikel 2 auf das untere Werkzeugteil 5 zu bewegt wird. Auf dem Werkzeugteil 5 ist eine Gegenstandsplatte 9 angeordnet, die zum Zusammenwirken mit dem Bandstahl 8 ausgebildet ist. Beim Absenken der Trägerplatte 14 senkrecht auf die Oberfläche der Folie 3 wird der Schnitt 13 gemäß Fig. 3 ausgeführt.

Wie bereits erwähnt, ergibt sich eine besonders vorteilhafte Anwendung der beschriebenen Lösung bei der Kombination des erläuterten Verfahrens mit dem sog. In-Mould-Labelling. Dabei werden in die einzelnen Formkavitäten des Werkzeugteils 5 Aufdruckelemente (Labels) 10 platziert, bevor der Tiefziehprozess durchgeführt wird. Beim anschließenden Tiefziehen der warmen Folie 3 kommt es zu einer bleibenden Verbindung zwischen Folie 3 und Aufdruckelement 10. Die Aufdruckelemente 10 können vorbedruckt sein, wodurch eine anschließende Bedruckung der gefertigten Artikel 2 entbehrlich wird.

Die Aufdruckelemente 10 werden dabei mittels nur sehr schematisch dargestellter Mittel 12 zum Einlegen in die Werkzeugkavität platziert.

Bei nach unten gefahrenem unteren Werkzeugteil 5 werden vorzugsweise in der geschwenkten Werkzeugposition einzelne Labels 10 in jede Werkzeugkavität eingesetzt. Die Labels 10 bedecken die Werkzeugwandung teilweise oder komplett. Um das Label 10 sicher zu halten bzw. die verdrängte Luft beim anschließenden Tiefziehen der Folie 3 abzuführen, könne Durchbrüche, Schlitze oder ähnliche Ausnehmungen sowohl im Label als auch in der Werkzeugwand eingearbeitet sein. Hierdurch legt sich das Label 10 optimal an die Kavitätswand an. Sind die Labels 10 im unteren Werkzeugteil 5 eingelegt, was mit den Mitteln 12 erfolgt, wird das Werkzeugteil zurückgeschwenkt und das Werkzeug 4, 5 geschlossen. Nach dem Tiefziehprozess müssen die mit einem Label 10 versehenen Artikel 2 nicht einzeln entformt werden, sondern sie werden zusammen mit dem Restgitter 6 entnommen.

Hierdurch wird es möglich, die Entformung sehr schnell durchzuführen. In der Folge wird es möglich, quasi parallel zum Abtransport des Restgitter 6 samt Artikel 2 bereits das untere Werkzeugteil 5 - gegebenenfalls noch im geschwenkten Zustand - mit neuen Labeln 10 zu versehen. Hierdurch kann die Gesamtzeit des Prozesszyklus erheblich verringert werden, was eine Produktivitätssteigerung zur Folge hat.

Die aus der Thermoformmaschine 1 entformten Restgitter 6 samt daran noch anhängender Artikel 2 werden - wie erwähnt - in eine Nachfolgeanlage 11 gefördert. Hier erfolgt ein endgültiges, d. h. vollständiges Abtrennen der Artikel 2 vom Restgitter 6. Die Verbindungsstellen 7 (s. Fig. 3) werden also durchbrochen. Da diese jedoch nur noch eine geringe Erstreckung aufweisen, lässt sich dieser Vorgang in sehr einfacher Weise durchführen.

Das erläuterte Bandstahl-Scheiden beim Einbringen des Schnitts 13 hat in vorteilhafter Weise zur Folge, dass die Werkzeugkosten gering gehalten werden können. Bei sonst üblichen Kombi-Durchfallschnitt-Werkzeugen wird in einer ersten Relativanordnung der beiden Werkzeugteile 4, 5 (als Matrize und Patrize ausgebildet) die Folie 3 geklemmt und tiefgezogen. Anschließend trennen diese Werkzeuge die Artikel 2 vom Restgitter 6 durch eine weitere Relativbewegung beider Werkzeugteile 4, 5 heraus. Dabei fahren Matrize und Patrize des Werkzeugs ineinander, so dass die Folie 3 abgeschert wird. Um dies prozesssicher durchführen zu können, müssen Matrize und Patrize relativ zueinander hochgenau ausgeführt sein (Toleranzbereich: ca. 5 µm).

Beim Einsatz der erläuterten Bandstahltechnik wird der Schnitt 13 ähnlich wie mit einem Messer eingebracht. Da hierbei die beiden Teile 4, 5 des Werkzeugs bzw. der Bandstahl 8 und die Gegenstandsplatte 9 nicht übermäßig genau gefertigt sein müssen, sind die Werkzeugkosten hier relativ gering.

Das vorgeschlagene Thermoformverfahren stellt also auf den Grundgedanken ab, dass zunächst die in einer - nicht dargestellten - Heizstation vorgewärmte Folie 3 möglichst horizontal in den Bereich des Werkzeugs 4, 5 gefördert wird, wozu entsprechende Stachelketten vorgesehen werden können. Das ortsfeste Oberwerkzeug 4 und das vertikal bewegbare (und gegebenenfalls auch verschwenkbare) Unterwerkzeug 5 werden dann nach Einfahren der Folie 3 zusammengefahren, bis das Werkzeug 4, 5 geschlossen ist und die Verformung, also das Tiefziehen, der Folie 3 erfolgen kann. Nach erfolgter Formung und Auskühlung der Artikel 2 und dem teilweisen Ausstanzen der Artikel 2 aus der Restfolie 6 durch Bandstahlschnitt öffnet das Werkzeug 4, 5, indem das Unterwerkzeug 5 vertikal nach unten bewegt wird (das Oberwerkzeug 4 bleibt ortsfest). Die geformten Artikel 2 und die Folie 3 bzw. der restliche Teil 6 der Folie 3 bleiben dabei weitgehend in Position, d. h. unverändert in der Höhe. Das bedeutet, dass durch das Absenken des Unterwerkzeugs 5 die Artikel 2 aus den Formteilkavitäten dieses Werkzeugteils gelangen. Folie 3 bzw. restlicher Teil 6 der Folie 3 samt Artikel 2 können nun horizontal aus dem Werkzeugbereich herausgefördert werden, wobei die Artikel 2 und die Restfolie 6 noch an den Verbindungsstellen 7 zusammenhängen, was das gemeinsame Abtransportieren von Artikeln 2 und Restfolie 6 möglich macht. Die Verbindungsstellen 7 sind hinsichtlich ihrer Anzahl und Erstreckung und damit bezüglich ihrer Tragfähigkeit so gewählt bzw. ausgebildet, dass sie das gemeinsame Abtransportieren von Artikeln 2 und Restfolie 6 erlauben. Die Wahl der Erstreckung der Verbindungsstellen 7 erfolgt also so, dass einerseits das sichere Abtransportieren möglich ist und andererseits ein späteres Trennen der Artikel 2 von der Restfolie 6 leicht möglich ist. Bewährt hat sich z. B. eine Verbindung zwischen Artikel 2 und Restfolie 6 über 4 Verbindungsstellen 7, die jeweils eine Erstreckung (Breite bzw. Länge) von 0,5 mm haben.

Das nach unten abgesenkte und gegebenenfalls geschwenkte Unterwerkzeug 5 wird während des Abtransports von Artikeln 2 und Restfolie 6 bereits mit neuen Labeln 10 bestückt. Restfolie 6 und Artikel 2 werden zur Nachfolgeanlage 11 gefördert, wo ein Durchtrennen der Verbindungsstellen 7 erfolgt, so dass die fertigen Artikel 2 vorliegen, die dann gestapelt werden können. Die Folie 3 wird dabei insgesamt also als Ganzes bandartig durch die Thermoformmaschine 1 bewegt.

Möglich ist es auch, das In-Mold-Labelling in der Thermoformmaschine 1 vorzunehmen und anschließend die Restgitter mit daran noch vollständig angeordneten Artikeln 2 - also ohne Durchführung eines Stanzvorgangs in der Thermoformmaschine 1 - zu entformen und in eine nachgeschaltete Stanzmaschine zu verbringen, wo erst die Trennung von Artikeln 2 und Restgitter 6 erfolgt.

Sobald sich das Werkzeug 4, 5, nach dem Tiefziehen durch vertikales Auseinanderfahren öffnet, kann durch einen Greifer das Restgitter 6 samt Artikeln 2 entnommen werden, während in das nach unten gefahrene Werkzeugteil 5 bereits durch die Mittel 12 zum Einlegen des Aufdruckelements 10 neue Label (zeitlich parallel zum Entformen) eingelegt werden, während noch der Abtransport der gefertigten Artikel 2 erfolgt. Dadurch wird die Zykluszeit erheblich gesenkt.

Im Unterschied zu vorbekannten Lösungen, bei denen die Artikel 2 vor dem Entformen aus dem Werkzeug 4, 5 vom Restgitter ausgestanzt werden, erfolgt also die (zumindest endgültige) Trennung von Artikel 2 und Restgitter 6 erst außerhalb des Werkzeugs 4, 5. Es müssen also nicht erst die gelabelten (fertigen) Artikel 2 aus dem Unterwerkzeug 5 aufwendig und zeitintensiv entnommen werden, bevor das Unterwerkzeug 5 erneut mit neuen Labeln 10 bestückt werden kann.

Sowohl in Kippmaschinen als auch bei Vertikalmaschinen wird es damit möglich, bei der Anwendung der In-Mold-Labelfing-Technik während der am Restgitter hängenden Entformung der Artikel bereits neue Label 10 in ein Werkzeugteil einzulegen, um die Taktzahl der Anlage zu erhöhen und damit ihre Produktivität zu verbessern.

### Bezugszeichenliste:

- 1: Thermoformmaschine
- 2: Artikel
- 3: thermoplastische Folie
- 4, 5: Werkzeug
- 4: Werkzeughälfte
- 5: Werkzeughälfte
- 6: restlicher Teil der Folie (Restgitter)
- 7: Verbindungsstelle
- 8, 9: Mittel zum Ausschneiden
- 8: Bandstahl
- 9: Gegenstandsplatte
- 10: Aufdruckelement (Label)
- 11: Nachfolgeanlage
- 12: Mittel zum Einlegen des Aufdruckelements
- 13: Schnitt
- 14: Trägerplatte

- V: Vertikalrichtung
- α: Schwenkwinkel
- F: Folienförderrichtung
- S: Stanzrichtung

## Patentansprüche

1. Verfahren zum Betreiben einer Thermoformmaschine (1) zum Formen von Artikeln (2) aus Kunststoff, bei dem eine thermoplastische Folie (3) in ein mindestens zweiteiliges Werkzeug (4, 5) eingebracht und tiefgezogen wird,
**dadurch gekennzeichnet,**
**dass** vor dem Tiefziehen der Folie (3) mindestens ein Aufdruckelement (10) in mindestens einen Teil (5) des Werkzeugs (4, 5), vorzugsweise in die mindestens eine Formteilkavität des Werkzeugteils (4, 5), eingelegt wird, das durch das Tiefziehen mit der einen Seite der Folie (3) bleibend verbunden wird, und
**dass** nach dem Tiefziehen der Folie (3) und der Herstellung der Artikel (2) die geformten Artikel (2) aus dem restlichen Teil (6) der Folie (3) ausgeschnitten, insbesondere ausgestanzt werden, wobei der Schneidvorgang mittels Bandstahlschnitt erfolgt.

2. Verfahren nach Anspruch 1,
**dadurch gekennzeichnet,**
**dass** der zum Ausschneiden zum Einsatz kommende Bandstahl (8) rechtwinkelig auf die Folie (3) gedrückt wird, wobei der Bandstahl (8) mit einer sich auf der anderen Seite der Folie (3) befindlichen Gegenstandsplatte (9) zusammenwirkt.

3. Verfahren nach Anspruch 1 oder 2,
**dadurch gekennzeichnet,**
**dass** nach dem Öffnen des Werkzeugs (4, 5) das eine Teil (5) des Werkzeugs (4, 5) um einen Schwenkwinkel (α) in eine geschwenkte Position gefahren wird, in der die Entformung der fertigen Artikel (2) und des restlichen Teils (6) der Folie (3) erfolgt.

4. Verfahren nach einem der Ansprüche 1 bis 3,
**dadurch gekennzeichnet,**
**dass** nach dem Tiefziehen und nach dem Öffnen des Werkzeugs (4, 5) alle geformten Artikel (2) samt dem restlichen Teil (6) der Folie (3) gemeinsam aus dem Werkzeug (4, 5) entformt und abtransportiert werden, wobei alle geformten Artikel (2) und der restliche Teil (6) der Folie (3) zumindest teilweise miteinander verbunden sind.

5. Verfahren nach Anspruch 4,
**dadurch gekennzeichnet,**
**dass** nach dem Tiefziehen und vorzugsweise nach dem Öffnen des Werkzeugs (4, 5) die geformten Artikel (2) aus dem restlichen Teil (6) der Folie (3) teilweise ausgeschnitten werden, wobei der Schneidvorgang so erfolgt, dass mindestens eine Verbindungsstelle (7), vorzugsweise 3 bis 8 Verbindungsstellen (7), zwischen jedem Artikel (2) und dem restlichen Teil (6) der Folie (3) erhalten bleibt.

6. Verfahren nach Anspruch 5,
**dadurch gekennzeichnet,**
**dass** die mindestens eine Verbindungsstelle (7) zwischen jedem Artikel (2) und dem restlichen Teil (6) der Folie (3) eine Erstreckung aufweist, die zwischen dem 0,5-fachen und 2,0-fachen der Dicke der Folie (3) liegt, vorzugsweise dem 1,0-fachen der Dicke der Folie (3) entspricht.

7. Verfahren nach Anspruch 5 oder 6,
**dadurch gekennzeichnet,**
**dass** nach dem Entformen der Artikel (2) samt dem restlichen Teil (6) der Folie (3) aus dem Werkzeug (4, 5) die Artikel (2) samt restlicher Folie (6) in eine Nachfolgeanlage (11) gefördert werden, in der die mindestens eine Verbindungsstelle (7) durchtrennt und **dadurch** die Artikel (2) vom restlichen Teil (6) der Folie (3) getrennt werden.

8. Verfahren nach Anspruch 7,
**dadurch gekennzeichnet,**
**dass** in der Nachfolgeanlage (11) eine Stapelung gefertigter Artikel (2) erfolgt.

9. Verfahren nach einem der Ansprüche 1 bis 4,
**dadurch gekennzeichnet,**
**dass** nach dem Tiefziehen und nach dem Öffnen des Werkzeugs (4, 5) alle geformten Artikel (2) samt dem restlichen Teil (6) der Folie (3) gemeinsam aus dem Werkzeug (4, 5) entformt und abtransportiert werden, wobei Artikel (2) und restlicher Teil (6) der Folie (3) vollständig miteinander verbunden sind und wobei das Trennen der Artikel (2) von dem restlichen Teil (6) der Folie (3) in einer Nachfolgeanlage (11) erfolgt.

10. Verfahren nach einem der Ansprüche 1 bis 9,
**dadurch gekennzeichnet,**
**dass** die Folie (3) im wesentlichen horizontal in den Bereich des Werkzeugs (4, 5) der Thermoformmaschine (1) eintritt und nach dem Tiefziehen und nach dem Öffnen des Werkzeugs (4, 5) die geformten Artikel (2) samt dem restlichen Teil (6) der Folie (3) den Bereich des Werkzeugs (4, 5) im wesentlichen in horizontale Richtung verlassen.

11. Verfahren nach einem der Ansprüche 1 bis 10,
**dadurch gekennzeichnet,**
**dass** unmittelbar nach dem Öffnen des Werkzeugs (4, 5) und nach dem oder parallel zum Entfernen der geformten Artikel (2) samt dem restlichen Teil (6) der Folie (3) mindestens ein Teil (5) des Werkzeugs (4, 5), vorzugsweise die mindestens eine Formteilkavität des Werkzeugteils (4, 5), mit mindestens einem neuen Aufdruckelement (10) versehen wird.

12. Thermoformmaschine (1) zum Formen von Artikeln (2) aus Kunststoff, mit einem mindestens zweiteiligen Werkzeug (4, 5), in das eine thermoplastische Folie (3) eingebracht und tiefgezogen werden kann,
**gekennzeichnet durch**
Mittel (12) zum Einlegen mindestens eines Aufdruckelements (10) in einen Teil (5) des Werkzeugs (4, 5), vorzugsweise in die mindestens eine Formteilkavität des Werkzeugteils (4, 5), sowie
in der Thermoformmaschine (1) oder in einer der Thermoformmaschine (1) nachgeschalteten Nachfolgeanlage (11) angeordnete Mittel (8, 9) zum Ausschneiden der geformten Artikel (2) aus dem restlichen Teil (6) der Folie (3), wobei die Mittel (8, 9) zum Ausschneiden Bandstahlschneidemittel sind.

13. Thermoformmaschine nach Anspruch 12,
**dadurch gekennzeichnet,**
**dass** die Mittel (8, 9) zum Ausschneiden der geformten Artikel (2) aus dem restlichen Teil (6) der Folie (3) zum nur teilweisen Ausschneiden geeignet sind, so dass mindestens eine Verbindungsstelle (7), vorzugsweise 3 bis 8 Verbindungsstellen (7), zwischen jedem Artikel (2) und dem restlichen Teil (6) der Folie (3) erhalten bleibt.

14. Thermoformmaschine nach Anspruch 13,
**dadurch gekennzeichnet,**
**dass** die Mittel (8, 9) zum Ausschneiden so ausgebildet sind, dass sie die geformten Artikel (2) von dem restlichen Teil (6) der Folie (3) so trennen, dass die mindestens eine Verbindungsstelle (7) eine Erstreckung aufweist, die zwischen dem 0,5-fachen und 2,0-fachen der Dicke der Folie (3) liegt, vorzugsweise dem 1,0-fachen der Dicke der Folie (3) entspricht.
